# EUROPEAN PATENT APPLICATION

(11) **EP 2 719 776 A1**
(43) Date of publication of application: **16.04.2014**
(21) Application number: 12306253.1
(22) Date of filing: 12.10.2012
(51) Int. Cl.: C21B 5/00, C21B 9/00, F23J 3/04, F28D 15/00, F28D 21/00

(54) **Blast furnace process using hot oxygen and plant for same**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Grant, Michael G. K., 78000 Versailles (FR); Tsiava, Rémi, 91250 Saint Germain-les-Corbeil (FR); Devaux, Michel, 77680 Roissy-en-Brie (FR)
(74) Representative: De Vleeschauwer, Natalie Y.L.D.

(57) **Abstract**

Process in which metal is produced from ore in a blast furnace, whereby oxygen is heated in an oxygen preheating installation and hot oxygen thus obtained is supplied to the blast furnace, the oxygen being heated by direct or indirect heat exchange with hot flue gas generated by combusting fuel with oxidizer in a combustion chamber, and plant for use in said process.

## Description

The blast furnace was and continues to be the primary method worldwide of producing metal from ore and in particular for producing iron for the manufacture of steel. It accounts for approximately 70% of the iron production worldwide. In geographical areas with limited access to scrap, steel manufacture relies almost entirely on blast furnaces.

Blast furnaces require coke for the production of metal. They also require significant amounts oxygen-containing blast or wind, typically air.

A main preoccupation in blast furnace operation is the reduction of coke consumption per specific mass of metal produced so as to decrease the metal production costs and emissions, in particular of CO₂, into the atmosphere.

In this regard, it is known to heat the blast air in hot stoves to as much as 1300°C upstream of the blast furnace.

It is also known to use oxygen-enriched air as blast or wind in order to increase the efficiency of the blast furnace, in spite of the cost of oxygen.

When oxygen-enriched air is used, the oxygen is generally mixed with the air upstream of the hot stoves so that both the blast air and the oxygen are heated upstream of the blast furnace. In that case, the oxygen-content of the enriched air is kept below or at 30%vol O₂ to 35%vol O₂ in order to ensure safe operation of the hot stoves and so as to prevent spontaneous ignition caused by even small leaks of oxygen-enriched hot air in the hot stoves or hot blast piping.

EP-A-0922772 describes an alternative system for injecting hot oxygen into a blast furnace. According to EP-A-0922772, a blast air stream is heated in a heater, for example to a temperature of from 870°C to 1320°C, fuel is passed into the heated blast air stream and a jet of oxygen is injected into the hot blast air stream at a velocity and at a temperature higher than those of the blast air stream, the temperature of the jet of oxygen being for example from 1200°C to 1650°C. As a consequence ofthus injecting fuel and oxygen in the blast air stream, fuel combusts with oxygen in said stream upstream of the blast furnace. The resulting hot blast stream is injected into the blast furnace.

For generating the jet of oxygen at a temperature higher than the temperature of the heated blast air stream prior to its injection into said blast air stream, EP-A-0922772 teaches the use of the thermal nozzle combustion method described in EP-A-0590572.

According to the thermal-nozzle combustion method of EP-A-0590572, oxidant having an oxygen concentration of at least 30%vol O₂ is supplied at an initial velocity within an oxidant supply duct. Fuel is injected into said duct so as to combust at most 20% of the oxygen of the oxidant, whereby the combustion reaction products mix with the remaining oxygen of the oxidant and the temperature of remaining oxidant is raised within the duct. The resulting mixture is then ejected from the duct as heated oxidant at an exit velocity which exceeds the initial oxidant velocity.

In practice, the method according to EP-A-0922772 has failed to enable a significant improvement in the operation of the blast furnace and has in particular failed to enable a significant reduction in the coke consumption per specific mass of iron produced. It is speculated that it is due to the fact that what is injected into the blast furnace according to EP-A-0922772 is not a stream of hot oxygen-enriched air, but rather a mixture of air, oxygen and combustion products, such as in particular CO₂ + H₂O, generated by both the combustion of fuel in the oxidant to produce heated oxidant according to EP-A-0590572, referred to as "oxygen jet" in EP-A-0922772, and the combustion of fuel with oxygen in the heated blast air stream as described in EP-A-0922772 itself. It is known in the art that the injection of CO₂ and H₂O gives rise to a strongly endothermic reaction with the hot coke in the blast furnace and thus has a cooling effect in the blast furnace, lowering the raceway adiabatic flame temperature (RAFT), thereby cancelling out, at least in part, the desired effects of oxygen preheating.

There thus remains a need for a process and plant, which enable blast furnace operation including:
● supplying highly oxygen-enriched preheated blast air in a secure and durable manner, and
● preheating oxygen for effectively improving the operation of a blast furnace and permitting an effective reduction in the coke consumption per specific mass of iron produced,
   whereby highly oxygen enriched air is enriched air having an oxygen content higher than 30%vol, preferably higher than 35%vol.

It is an aim of the present invention to provide a blast-furnace process and a plant for said process which make it possible to overcome, at least in part, the above-described problems associated with the prior art.

Thereto, the present invention provides a process in which metal is produced from ore in a blast furnace, whereby blast furnace gas is also generated. The blast furnace may produce iron, and in particular iron for steelmaking, ferro-alloys, such as, for example, ferro-manganese, or non-ferrous metals, such as, for example, lead.

According to the process of the invention, oxygen is heated in an oxygen preheating installation and hot oxygen thus obtained is supplied to the blast furnace, the oxygen preheating installation being distinct from the air preheating installation. Blast air is preferably likewise heated in a blast air preheating installation (such as hot stoves) and hot blast air thus obtained is supplied to the blast furnace. In the process of the present invention, in order to heat oxygen, hot flue gas is generated in the oxygen preheating installation by combusting fuel with oxidizer and oxygen is heated by direct or indirect heat exchange with said hot flue gas.

In the present context, direct heat exchange between two fluids refers to the process whereby the fluids are physically separated by a solid heat exchange wall and whereby thermal energy is transferred from one fluid to the other across said heat exchange wall. The heat exchange wall can have any suitable shape, such as, flat, tubular, corrugated, etc.

In the present context, indirect heat exchange between two fluids refers to the process whereby thermal energy is transferred by direct heat exchange from one of the two fluids to an intermediate fluid and whereby thermal energy is then transferred by direct heat exchange from the intermediate fluid to the other of the two fluids. Indirect heat exchange can take place in a single device, in which, for example, the first of the two fluids is separated from the intermediate fluid by a first solid heat exchange wall and in which the intermediate fluid is separated from the second of the two fluids by a second solid heat exchange wall. Indirect heat exchange can also take place in two distinct devices, for example, through direct heat exchange from the first of the two fluids to the intermediate fluid in a first heat exchanger, transport of the heated intermediate fluid from the first heat exchanger to a second heat exchanger and direct heat exchange between the intermediate fluid and the second of the two fluids in the second heat exchanger. The intermediate fluid may be stationary or it may be circulating.

Consequently, when, in accordance with the present invention, oxygen is heated by indirect heat exchange, an intermediate fluid is heated by direct heat exchange with the hot flue gas to generate hot intermediate fluid and the oxygen is heated by direct heat exchange with the hot intermediate fluid. In that case, the intermediate fluid is preferably heated by direct heat exchange with the hot flue gas in a secondary heat exchanger and the oxygen is preheated by direct heat exchange with the hot intermediate fluid in a primary heat exchanger.

According to one embodiment, the intermediate fluid circulates between the primary and the secondary heat exchanger in a closed loop. According to an alternative embodiment, which is of particular interest when the temperature of the tempered intermediate fluid downstream of the primary heat exchanger remains relatively high, the intermediate fluid may find used in other processes downstream of the secondary heat exchanger, for example as a heating or drying medium. The intermediate fluid is typically a gas, such as air or nitrogen, but it may also be a liquid, such as metal with low melting temperature, for example, lead.

Although the equipment for indirect heat exchange between the hot flue gas and the oxygen may be more complex than the equipment for direct heat exchange between the hot flue gas and the oxygen, indirect heat exchange presents a number of advantages. An important advantage is increased safety when hot flue gas is used to heat oxygen with a high O₂ concentration to high temperatures of, for example 600°C or more, in particular of 900°C or more, due to the highly reactive and corrosive nature of oxygen at those temperatures. By using a "clean" and mainly (for more than 50%vol) inert (as regards combustion) intermediate fluid, such as nitrogen or air, no reaction can take place between the oxygen and combustible matter the hot flue gas (or any fouling of the oxygen preheating installation by the hot flue gas) when the first or the second heat exchange wall were to be perforated after prolonged use. Indeed, even in the unlikely event of both the first and the second heat exchange wall being simultaneously perforated little or no reaction between the oxygen and hot flue gas or fouling would occur due to the buffer effect of the intermediate fluid. Another advantage of the indirect heat exchange is that it enables most of the heat transport from one location to another to be effected with a clean intermediate fluid, so that, on the one hand, the hot flue gas, with its inherent potential for fouling, can essentially be restricted to one location where the combustion of fuel with oxidizer takes place, and so that, on the other hand, the hot oxygen, with its potential for corrosion of transport ducts, remains restricted to the vicinity of the blast furnace itself.

A less complex oxygen preheating installation may be used when the oxygen is heated by direct heat exchange between oxygen and the hot flue gas in a heat exchanger, referred to as primary heat exchanger.

It will be appreciated that these oxygen preheating installations for heating oxygen by direct or indirect heat exchange are highly flexible and can also be used for supplying unheated oxygen to the blast furnace when no hot flue gas is generated or supplied to the corresponding heat exchanger.

If, downstream of this primary heat exchanger, the temperature of the tempered flue gas is still quite high, the tempered flue gas may be used as a heat source in further equipment downstream of the primary heat exchanger and/or may, at least in part be recycled and mixed with hot flue gas generated by the combustion of fuel with oxidizer upstream of the primary heat exchanger.

In order to limit the costs for oxygen preheating, air may be used as the oxidizer for combusting fuel.

Costs may likewise be reduced using a fuel which contains blast furnace gas, in particular at least part of the blast furnace gas generated by the blast furnace to which the hot oxygen is supplied in accordance with the present invention, and/or coke oven gas, in particular at least part of the coke oven gas generated by a coke oven or a coke oven battery which produces coke which is supplied to said blast furnace. Other fuels, such as natural gas, oil, coal, etc., may be used alone or in combination with blast furnace gas and/or coke oven gas, depending on their availability and cost and the energy requirement for heating oxygen.

In the present context, the term "coke oven gas" includes reformed coke oven gas (reformed to eliminate hydrocarbons, for example by steam reforming or CO₂ reforming) reformed.

The blast air, which is heated in the blast air preheating installation may be ambient air or may be oxygen-enriched air. In the latter case, the degree of oxygen enrichment of the blast air must be limited to a level enabling prolonged use of the blast air preheating installation for heating said oxygen-enriched blast air without premature deterioration of said installation. The degree of oxygen enrichment of the blast air must in particular be limited to a level that will minimize the possibility of igniting any of the equipment in the stove or hot blast piping if a leak develops. Typically, the blast which is heated in the blast air preheating installation has an oxygen-content between 21%vol and 35%vol, preferably between 21%vol and 30%vol, an oxygen-content of 21%vol corresponding to non-enriched air.

At least part of the generated hot oxygen is advantageously mixed with the hot blast air before they, i.e. the hot blast air and the at least part of the hot oxygen, are supplied to the blast furnace.

It may also be advantageous to introduce at least part of the hot oxygen into the blast furnace, separately from the hot blast air, for example by means of tuyeres specifically dedicated to the injection of hot oxygen.

The blast furnace typically comprises blast tuyeres for the injection of blast into the blast furnace. At least part of the hot oxygen is then preferably supplied to the blast furnace via the tuyeres.

The blast furnace generally comprises a tuyere header (known in the art as "bustle pipe") which feeds blast to the blast tuyeres. At least part of the hot oxygen is then preferably mixed with the hot blast air in the tuyere header and the gas mixture is fed from the tuyere to the blast tuyeres for its injection into the blast furnace.

In particular, if enough reducing gas, such as (unreformed or reformed) coke oven gas, recycled blast furnace gas (without or after CO₂ extraction) is available to substantially replace the hot blast air volume in the blast furnace, the hot oxygen can be injected separately from the reducing gas into the blast furnace through the tuyeres or through a separate header system, optionally even without the injection of blast air into the blast furnace.

In accordance with the present invention, the oxygen may be heated to a temperature between 50°C and 1300°C, preferably between 400°C and 1300°C and more preferably between 600°C or 800°C and 1300°C, or even more.

The hot oxygen leaves the oxygen preheating installation preferably at a pressure between 1.0 bara and 7.0 bara, more preferably between 2.0 bara and 5.5 bara and most preferably between 3.0 bara and 5.0 bara. In practice, the pressure depends on the design and size of the blast furnace

The oxygen has, per definition, an O₂ content higher than of air, usefully between 40%vol O₂ and 100%vol O₂, preferably between 50%vol O₂ and 100%vol O₂, more preferably between 75%vol O₂ and 100%vol O₂ and most preferably between 90%vol O₂ and 100%vol O₂.

As indicated above, the process may be a process for producing iron, for producing ferrous alloys or for producing non-ferrous metals or alloys.

The present invention also relates to a method of supplying hot oxygen to a blast furnace, whereby the hot oxygen is obtained by heating oxygen in an oxygen preheating installation as described, i.e. by generating hot flue gas in the oxygen preheating installation by combusting fuel with oxidizer and whereby the oxygen is heated by direct or indirect heat exchange with said hot flue gas according to any one of the embodiments described above.

The present invention further relates to a blast-furnace plant adapted for use in the process of the invention. The present invention thus also covers a plant comprising (a) a blast furnace for producing metal from ore, such as, for example, iron from iron ore, ferro-manganese from manganese ores, non-ferrous metals, such as lead, from lead concentrates, etc., and having an outlet for blast furnace gas and (b) an oxygen preheating installation for heating oxygen and having a hot oxygen outlet fluidly connected to the blast furnace. The blast furnace plant preferably furthermore comprises a blast air preheating installation (different from the oxygen preheating installation) for heating blast air and having a hot blast air outlet fluidly connected to the blast furnace.

According to the invention, the oxygen preheating installation of said blast-furnace plant comprises a combustion chamber for combusting fuel with oxidizer so as to generate hot flue gas, and one or more heat exchangers for heating the oxygen by direct or indirect heat exchange with the hot flue gas generated in the combustion chamber, as defined above.

For indirect heat exchange between the hot flue gas and the oxygen, the oxygen preheating installation may be equipped with a heat exchange device for heating the oxygen by indirect heat exchange with the hot flue gas, in which the hot flue gas is separated from a stationary or circulating intermediate fluid by a first solid heat exchange wall, for heat exchange across said first wall between the hot flue gas and the intermediate fluid, and in which the intermediate fluid is furthermore separated from the oxygen by a second solid heat exchange wall, for heat exchange across said second wall between the intermediate fluid and the oxygen. Alternatively, the oxygen preheating installation may be equipped with a primary and a secondary heat exchanger for heating the oxygen by indirect heat exchange with the hot flue gas, whereby, (i) in the secondary heat exchanger the hot flue gas is separated from the intermediate fluid by a first solid heat exchange wall for direct heat exchange across said first wall between the hot flue gas and the intermediate fluid, and (ii) in the primary heat exchanger, the intermediate fluid is separated from the oxygen by a second solid heat exchange wall for direct heat exchange across said second wall between the intermediate fluid and the oxygen. In the latter case, the oxygen preheating installation may advantageously comprise a pump for circulating the intermediate fluid between the secondary and the primary heat exchanger. However, recirculation of the intermediate fluid between the primary and secondary heat exchanger is not obligatory.

When direct heat exchange between the hot flue gas and the oxygen is intended, the oxygen preheating installation comprises a primary heat exchanger for the heating of the oxygen by direct heat exchange with the hot flue gas.

For safety reasons, said primary heat exchanger is preferably not integrated in the combustion chamber of the oxygen preheating installation. A transport duct is then provided for transporting hot flue gas from the combustion chamber to the primary heat exchanger. The oxygen preheating installation may also comprise a recycling duct for transporting at least part of the flue gas back from the primary heat exchanger to the combustion chamber for increased energy efficiency.

When air is used as combustion oxidizer in the combustion chamber, the plant typically comprises an air compressor for supplying combustion air oxygen to the combustion chamber. Said air compressor may be specifically dedicated to the oxygen preheating installation or may supply compressed air to a number of installations of the plant.

The combustion chamber is advantageously connected to a blast furnace gas outlet of the blast furnace for supplying blast furnace gas as fuel to the combustion chamber. Likewise, when a coke oven or coke oven battery is included in the plant, the combustion chamber is preferably connected to a coke oven gas outlet of a coke oven or coke oven battery for supplying coke oven gas as fuel to the combustion chamber. An additional fuel source, such as natural gas, oil, coal, etc may also be present for supplying other fuel to the combustion chamber, alone or in combination with coke oven gas and/or blast furnace gas.

When a coke oven or coke oven battery is included in the plant, a coke oven gas outlet of said coke oven or coke oven battery may also be connected to the blast furnace for supplying coke oven gas to the blast furnace as reducing gas, preferably in combination with the supply of coke oven gas to the combustion chamber of the oxygen preheating installation.

A blast furnace normally comprises tuyeres for the injection of hot blast into the blast furnace. Said tuyeres may be used not only to inject the hot blast air, but also the hot oxygen into the blast furnace. Thereto the hot blast air outlet of the blast air preheating installation is connected to the tuyeres for supplying hot blast air thereto and the hot oxygen outlet of the oxygen preheating installation is connected to the tuyeres for supplying hot oxygen thereto. Such blast furnaces typically also comprise a tuyere header ("bustle pipe"). In that case, it is sometimes preferred to mix the hot blast air and the hot oxygen in the tuyere header upstream of the tuyeres. Thereto, the hot blast air outlet and the hot oxygen outlet are connected to the tuyeres via the tuyere header. The hot blast air and the hot oxygen may also be mixed upstream of the tuyere header. The hot oxygen may also, in part or as a whole, be injected separately from the hot blast air, for example through different tuyeres.

In particular if enough reducing gas, such as (unreformed or reformed) coke oven gas, recycled blast furnace gas (without or after CO₂ extraction) is available to substantially replace the hot air volume in the blast furnace, hot oxygen can be injected separately from the reducing gas into the blast furnace though the tuyeres or through a separate header system.

The present invention also relates to the use of any one of the above-described embodiments of the plant in the process according to the invention, in particular for the production of iron from iron ore, ferro-manganese from manganese ores, non-ferrous metals, such as lead, from lead concentrates, etc.

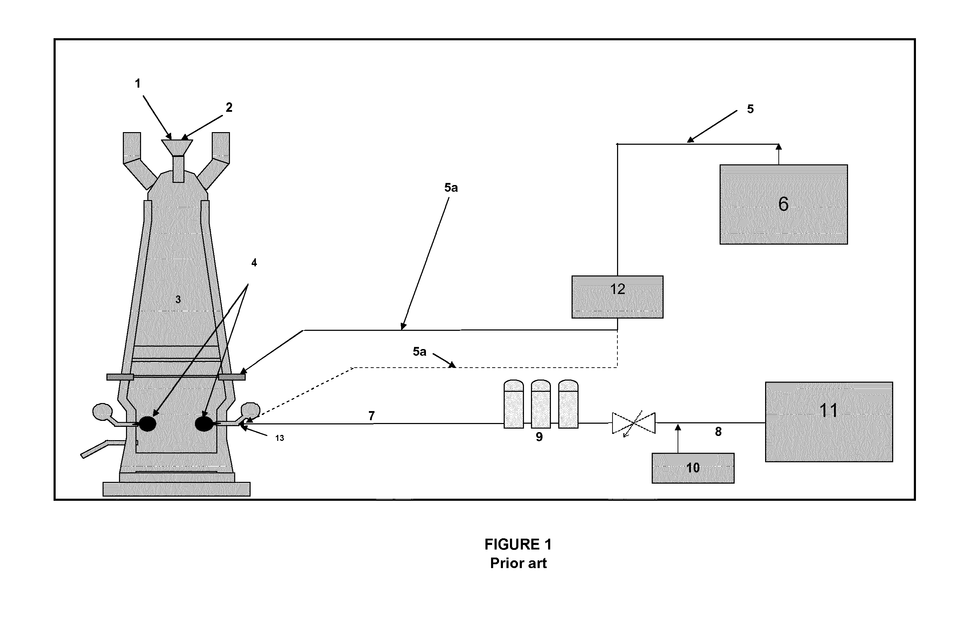

The present invention and its advantages are further illustrated with reference to the enclosed figures 1 to 3.
Figure 1 schematically shows a prior art blast-furnace plant in which oxygen 10 is added to the blast air 11 upstream of the hot stoves 9. In order to ensure safe operation of the hot stoves 9 and to prevent their premature aging and any spontaneous combustion if a leak of oxygen enriched air should develop, it has been found necessary, in this prior-art plant, to limit the oxygen-content of the enriched blast air 7 to at most 35%vol O₂ so that only limited use can be made of the advantages of hot oxygen in the blast furnace 3.

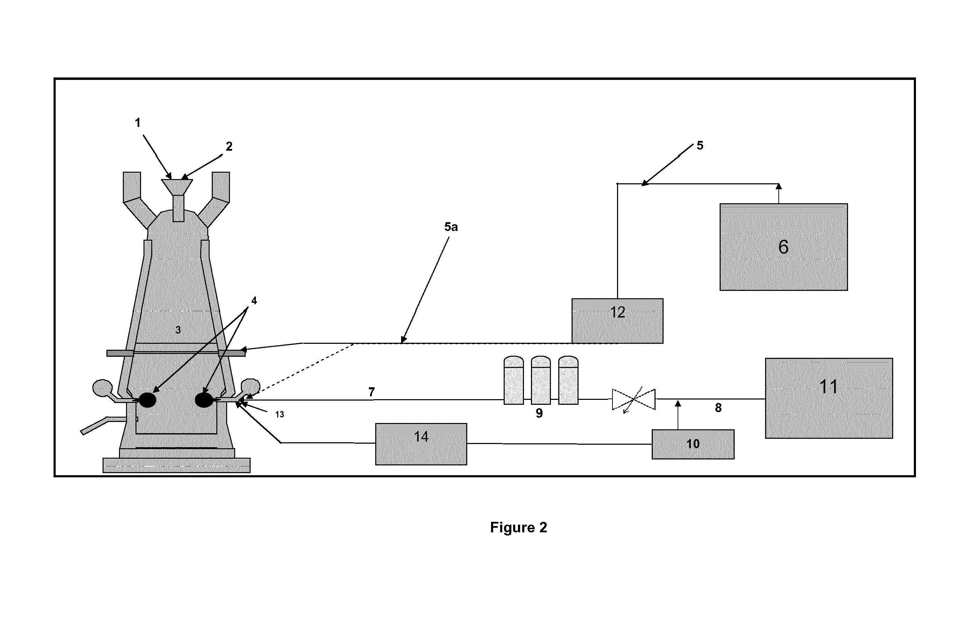

Figure 2 is a schematic representation of a blast-furnace plant similar to the one shown in figure 1, but whereby oxygen 10 is heated in an oxygen preheating installation ("oxygen heater") 14 in accordance with the present invention. As, in the plant according to the invention, the oxygen is kept separated from combustible matter in the oxygen preheating installation 14 and as the parts of the oxygen preheating installation 14 which come into contact with the hot oxygen are constructed of materials specifically selected to withstand the corrosive nature of hot oxygen, such as Inconel 600®, a much wider ratio of hot oxygen to hot air in the blast or even only hot oxygen can be safely supplied to the blast furnace.

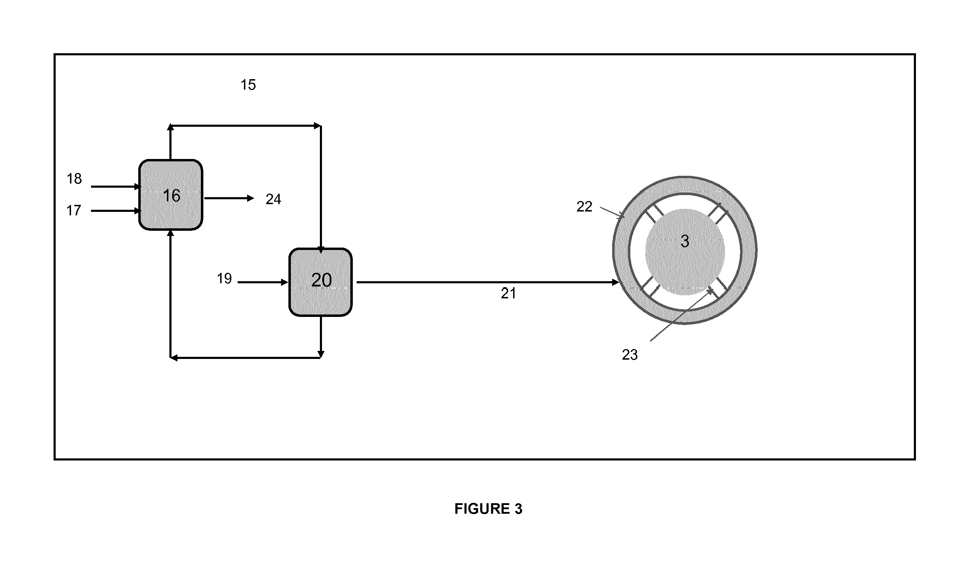

Figure 3 is a schematic diagram of an oxygen preheating installation 14 as used in accordance with the present invention and its connection to the blast furnace 3, and more specifically to the tuyere header 22 of the blast furnace 3. In the illustrated embodiment, only four tuyeres 23 are shown. In practice, the number of tuyeres connected to a tuyere header may be as high as forty. Said oxygen preheating installation can easily and safely provide hot oxygen at a temperature of up to 1000°C or more to the blast furnace.

### Legend of figures 1 to 3:

- 1:: ore
- 2:: coke
- 3:: blast furnace
- 4:: raceway
- 5:: cold coke oven gas
- 5a:: hot and/or reformed coke oven gas
- 6:: coke oven battery
- 7:: hot blast
- 8:: cold blast air
- 9:: blast hot stoves
- 10:: oxygen source (oxygen plant)
- 11:: air compressor
- 12:: coke oven gas reformer/heater
- 13:: coal supply to tuyeres
- 14:: oxygen preheating installation
- 15:: hot flue gas
- 16:: combustion chamber
- 17:: fuel
- 18:: oxidizer
- 19:: cold oxygen
- 20:: primary direct heat exchanger
- 21:: hot oxygen
- 22:: tuyere header
- 23:: tuyere
- 24:: flue gas purge

## Claims

1. Process for producing metal from ore in a blast furnace, further generating blast furnace gas, whereby
● oxygen is heated in an oxygen preheating installation and hot oxygen thus obtained is supplied to the blast furnace,
**characterized in that** in the oxygen preheating installation:
● hot flue gas is generated by combusting fuel with oxidizer,
● the oxygen is heated by direct or indirect heat exchange with the hot flue gas.

2. Process according to claim 1, whereby the oxygen is heated by indirect heat exchange: an intermediate fluid is heated by direct heat exchange with the hot flue gas to generate hot intermediate fluid and the oxygen is heated by direct heat exchange with the hot intermediate fluid.

3. Process according to claim 1, whereby the oxygen is heated by direct heat exchange between oxygen and the hot flue gas in a primary heat exchanger.

4. Process according to any one of the preceding claims, whereby the fuel contains blast furnace gas and/or coke oven gas.

5. Process according to any one of the preceding claims, whereby furthermore blast air is heated in a blast air preheating installing and hot blast air thus obtained is supplied to the blast furnace

6. Process according to claim 5, whereby at least part of the hot oxygen is mixed with the hot blast air before the hot oxygen and the hot blast air are supplied to the blast furnace.

7. Process according to claim 5 or 6, whereby at least part of the hot oxygen is supplied to the blast furnace separately from the hot blast air.

8. Process according to claim 7, whereby the blast furnace comprises tuyeres and whereby at least part of the hot oxygen is supplied to the blast furnaces via tuyeres for hot oxygen and separately from the hot blast air.

9. Method for supplying hot oxygen to a blast furnace, whereby oxygen is heated in an oxygen preheating installation and hot oxygen thus obtained is supplied to the blast furnace, **characterized in that** in the oxygen preheating installation:
● hot flue gas is generated by combusting fuel with oxidizer,
● oxygen is heated by direct or indirect heat exchange with the hot flue gas so as to obtain hot oxygen.

10. Plant comprising:
● a blast furnace for producing metal from ore and having an outlet for blast furnace gas,
● an oxygen preheating installation for heating oxygen and having a hot oxygen outlet fluidly connected to the blast furnace,
**characterized in that** the oxygen preheating installation comprises:
● a combustion chamber for combusting fuel with oxidizer so as to generate hot flue gas, and
● one or more heat exchangers for heating the oxygen so as to obtain the hot oxygen by direct or indirect heat exchange with the hot flue gas generated in the combustion chamber.

11. Plant according to claim 10, further comprising a blast air preheating installation for heating blast air so as to obtain hot blast air and having a hot blast air outlet fluidly connected to the blast furnace.

12. Plant according to claim 10 or 11, whereby the oxygen preheating installation comprises a heat exchange device for heating the oxygen by indirect heat exchange with the hot flue gas, in which the hot flue gas is separated from an intermediate fluid by a first solid heat exchange wall, for heat exchange across said first wall between the hot flue gas and the intermediate fluid, and in which the intermediate fluid is separated from the oxygen by a second solid heat exchange wall, for heat exchange across said second wall between the intermediate fluid and the oxygen.

13. Plant according to claim 10 or 11, whereby the oxygen preheating installation comprises a primary and a secondary heat exchanger for heating the oxygen by indirect heat exchange with the hot flue gas, whereby, in the secondary heat exchanger the hot flue gas is separated from the intermediate fluid by a first solid heat exchange wall for direct heat exchange across said first wall between the hot flue gas and the intermediate fluid, and whereby, in the primary heat exchanger, the intermediate fluid is separated from the oxygen by a second solid heat exchange wall for direct heat exchange across said second wall between the intermediate fluid and the oxygen.

14. Plant according to claim 10 or 11, whereby the oxygen preheating installation comprises a primary heat exchanger for the heating of the oxygen by direct heat exchange with the hot flue gas.

15. Plant according to any one of claims 10 to 14, whereby the combustion chamber is fluidly connected to a blast furnace gas outlet of the blast furnace for supplying blast furnace gas as fuel to the combustion chamber and/or whereby the combustion chamber is fluidly connected to a coke oven gas outlet of a coke oven or coke oven battery for supplying coke oven gas as fuel to the combustion chamber.
